# EUROPÄISCHE PATENTSCHRIFT

(11) **EP 1 948 422 B1**
(45) Veröffentlichungstag und Bekanntmachung des Hinweises auf die Patenterteilung: **25.03.2009**
(21) Anmeldenummer: 06792411.8
(22) Anmeldetag: 10.10.2006
(51) Int. Cl.: B29C 53/60, B21D 15/04

(54) **VERFAHREN UND VORRICHTUNG ZUR HERSTELLUNG EINES WICKELROHRES**
METHOD AND APPARATUS FOR MANUFACTURING A WRAP-AROUND TUBE
PROCEDE ET DISPOSITIF DE FABRICATION D'UN TUBE SPIRALE

(30) Priorität: 28.10.2005 DE 102005051788
(43) Veröffentlichungstag der Anmeldung: 30.07.2008
(73) Patentinhaber: Novelis Deutschland GmbH, 37075 Göttingen (DE)
(72) Erfinder: MÜLLER, Christian, 57462 Olpe (DE); SCHÄFER, Friedhelm, 57299 Burbach (DE)
(74) Vertreter: HOFFMANN EITLE
(86) Internationale Anmeldenummer: PCT/EP2006/009769
(87) Internationale Veröffentlichungsnummer: WO 2007/048498

(56) Entgegenhaltungen:
- EP-A1- 1 371 405
- WO-A-98/02297
- US-A- 5 672 232

## Beschreibung

### Technisches Gebiet

Die Erfindung betrifft ein Verfahren und eine Vorrichtung zur Herstellung eines Wickelrohres.

### Stand der Technik

Wickelrohre sind grundsätzlich bekannt und bestehen wie zum Beispiel bei EP-A-1 371 405 aus einer oder mehreren Lagen von schraubenförmig gewickeltem Bandmaterial. Typischerweise sind derartige Wickelrohre mit einer Rillung versehen, so dass sie biegsam und flexibel sind und sich dadurch für zahlreiche Anwendungsfälle eignen. Beispielsweise werden derartige Wickelrohre in der Automobiltechnik als schützende Umhüllungen von Leitungen oder Kabel gegen Wärmestrahlung eingesetzt. Als weiterer Anwendungsfall ist die Verwendung als Wärmeleitungsrohre unter anderem im Caravan- und Wohnwagenbau zu nennen.

Aus der DE 1 001 582 B ist eine Vorrichtung zur Herstellung schraubenförmig gerillter Rohre bekannt, bei der ein als Wickeldorn dienendes Rohr bandförmiges Material von Rollen abzieht, die sich um festliegende Achsen drehen. Die bandförmigen Materialien werden auf den sich drehenden Wickeldorn gewickelt. Ähnliche Anordnungen sind aus der DE 31 16 990 A1 und der DE 1 853 216 U bekannt.

### Darstellung der Erfindung

Der Erfindung liegt die Aufgabe zugrunde, ein Verfahren und eine Vorrichtung zur Herstellung eines Wickelrohres zu schaffen, das/die im Hinblick auf die Effizienz verbessert ist.

Die Lösung dieser Aufgabe erfolgt zum einen durch das im Anspruch 1 beschriebene Verfahren.

Demzufolge wird bei einem Verfahren zur Herstellung eines Wickelrohres aus zumindest einem bandförmigen Material das Wickeln durch zumindest ein sich drehendes Wickelelement bewirkt, das mit dem Wickelrohr mittelbar oder unmittelbar in Eingriff ist. Zu dem bandförmigen Material sei erwähnt, dass dieses durch Metall, beispielsweise Aluminium, Papier, Kunststofffolie und jegliche andere geeigneten Materialien gebildet werden kann. Bevorzugt wird das Wickelrohr mit mehreren Lagen, beispielsweise drei Lagen gewickelt. Es können jedoch auch mehr als drei Lagen, beispielsweise fünf Materiallagen vorgesehen sein. Unabhängig von der Zahl der Materiallagen wird bevorzugt, dass zumindest eine Materiallage aus Metall, vorzugsweise Aluminium besteht.

Das bandförmige Material wird aus Gründen der Stabilität mit Überlappung gewickelt. Ferner wird das Wickelrohr im Rahmen des erfindungsgemäßen Verfahrens üblicherweise mit mehreren Schichten gewickelt. Ein derzeit bevorzugter Aufbau weist eine innere Lage aus Aluminium und zwei Außenlagen aus Papier auf. Jede Lage wird für sich genommen mit Überlappung gewickelt. Ferner weist zumindest eine der Lagen einen wärmeaktivierbaren Kleber auf. Dieser wird, nachdem das Wickelrohr, wie nachfolgend genauer beschrieben, gewickelt und bevorzugt mit einer Rillung versehen ist, aktiviert, um die einzelnen Lagen fest miteinander zu verbinden. Beispielsweise können die beiden Außenlagen aus Papier an ihrer Innenseite eine derartige Klebstoffschicht aufweisen. Das bandförmige Material kann eine Breite von beispielsweise 45 mm bis 60 mm aufweisen, und die Überlappung kann beispielsweise 5 mm betragen. Die Überlappung kann jedoch bis zu 50% der Bandbreite betragen.

Im Rahmen der Herstellung des Wickelrohres wird das bandförmige Material zunächst zu einer Hülse gewickelt. Dieses Wickeln wird erfindungsgemäß durch ein sich drehendes Wickelelement bewirkt. Dies stellt den entscheidenden Unterschied zum Stand der Technik dar. Herkömmlich erfolgte das Wickeln nämlich durch die Bewegung einer oder mehrerer sogenannter Bobinen, auf welche die bandförmigen Materialien aufgewickelt sind, um einen sogenannten Wickelkern. Der Wickelkern sowie die gewickelte Hülse stand herkömmlich in Umfangsrichtung still, während sich die Bobinen drehend um die zu wickelnde Hülse bewegten. Gemäß dem neuen Verfahren können die Bobinen stillstehen, und die zu wickelnde Hülse wird durch das sich drehende Wickelelement drehend angetrieben. Das Wickelelement kann beispielsweise ein sogenannter Kerndorn sein, der sich im Inneren des Wickelrohres befindet und an seiner Außenseite mit axialverlaufenden Vorsprüngen, beispielsweise Zähnen, versehen ist, die mit der Innenseite des Wickelrohres mittelbar oder unmittelbar in Eingriff sind. Alternativ können beispielsweise mehrere sich drehende Räder mit der Innenseite des Rohres in Eingriff sein. Als weitere Möglichkeit sei genannt, dass ein oder mehrere Wickelelemente, beispielsweise Räder, Walzen oder umlaufende Fördergurte mit der Außenseite des Rohres in Eingriff sein können. In jedem Fall wird hierdurch eine Drehbewegung auf das Wickelrohr oder eine zunächst erzeugte, nachfolgend noch genauer erläuterte Hülse übertragen, und in neuartiger Weise können die bandförmigen Materialien beispielsweise von ortsfesten Bobinen abgezogen werden. Es ist jedoch ebenso denkbar, dass die im Rahmen des erfindungsgemäßen Verfahrens verwendete Vorrichtung stromabwärts einer Vorrichtung zur Herstellung eines bandförmigen, zu einem Wickelrohr zu wickelnden Materials liegt. In diesem Fall wird das bandförmige Material nahezu unmittelbar nach seiner Herstellung zu dem Wickelrohr weiterverarbeitet. Es sei jedoch erwähnt, dass derzeit bevorzugt wird, auf Bobinen aufgewickeltes Material zu verwenden, das, wie erwähnt, zumindest teilweise durch die Drehbewegung des sich drehenden Wickelelements von den Bobinen abgewickelt wird.

Durch das erfindungsgemäße Verfahren ergibt sich als Vorteil, dass die Bobinen ortsfest sein können. Dadurch, dass sich die Bobinen nicht mehr um das zu wickelnde Rohr drehen müssen, können sie wesentlich größer sein, als dies bislang der Fall war. Mit den herkömmlichen Vorrichtungen, bei denen mehrere Bobinen um das zu wickelnde Rohr gedreht werden mussten, war die Festigkeitsgrenze erreicht. Hierdurch war sowohl die maximale Größe, d.h. das Gewicht der Bobinen eingeschränkt, als auch die maximale Wickelgeschwindigkeit. Durch das erfindungsgemäße Verfahren können die Bobinen deutlich vergrößert werden. Während bislang beispielsweise Durchmesser von etwa 400 mm üblich waren, haben Versuche gezeigt, dass die Bobinen Durchmesser von bis zu 1000 mm bekommen können. Dies bedeutet etwa die sechsfache Länge von Bandmaterial. Hierdurch können die Rüstzeiten deutlich gesenkt werden, da die Bobinen wesentlich seltener gewechselt werden müssen.

Darüber hinaus können die nunmehr verwendeten Bobinen auch dahingehend von den herkömmlichen Bobinen unterschiedlich ausgeführt sein, dass die Breite des Bandmaterials vergrößert wird. Hierdurch sind neue Arten von Wickelrohren herstellbar.

Ferner hat das erfindungsgemäß verwendete Wickelelement ein deutlich geringeres Trägheitsmoment als die bislang verwendete Vorrichtung zum Drehen mehrerer Bobinen um das zu wickelnde Rohr. Hierdurch sind höhere Drehgeschwindigkeiten realisierbar, so dass die Effizienz weiter erhöht wird. Beispielsweise wurden bei Versuchen Drehzahlen erreicht, die im Vergleich zu dem herkömmlichen Verfahren um ein Vielfaches höher sind. Es hat sich außerdem herausgestellt, dass die durch das neuartige Verfahren erzeugten Wickelrohre eine verbesserte Biegsamkeit aufweisen, was für bestimmte Anwendungsfälle vorteilhaft ist. Schließlich bietet das erfindungsgemäße Verfahren eine verbesserte Sicherheit, insbesondere bei einem Materialwechsel, da dieser nicht mehr an den sich drehenden Bobinen vorgenommen werden muss, die zahlreiche Quetschstellen aufweisen.

Die bandförmigen Materialien werden auf einen sogenannten Wickelkern gewickelt, der stillsteht, so dass hierfür kein Antrieb erforderlich ist.

Bevorzugte Weiterbildungen sind in den weiteren Ansprüchen beschrieben.

Wie erwähnt, wird für das Wickelelement, das mit dem Wickelrohr unmittelbar oder mittelbar in Eingriff ist, derzeit ein sogenannter Kerndorn bevorzugt, der sich im Inneren des Wickelrohres befindet. Mit einer derartigen Ausführungsform wurden im Rahmen des erfindungsgemäßen Verfahrens bei Versuchen besonders gute Erfahrungen gemacht. Ein mittelbarer Eingriff zwischen dem Kerndorn und dem Wickelrohr kann beispielsweise dadurch vorliegen, dass zwischen dem Kerndorn und der Innenseite des Wickelrohres ein sogenanntes Prozesspapier verwendet wird, das von dem fertigen Wickelrohr entfernt wird und im Rahmen des Prozesses zur Verringerung der Reibung, indem es beispielsweise auf zumindest einer Seite eingefettet ist, verwendet werden kann. Der Eingriff mit dem Wickelrohr kann dadurch besonders zuverlässig ausgebildet werden, dass der Kerndorn mit einer äußeren Verzahnung, mit anderen Worten mit axial verlaufenden Vorsprüngen versehen ist.

Ferner wird derzeit bevorzugt, dass das zumindest eine bandförmige Material von zumindest einer Bobine abgewickelt wird. Hierdurch kann das erfindungsgemäße Verfahren in günstiger Weise unabhängig von den Herstellungsverfahren zur Herstellung der bandförmigen Materialien arbeiten. Insbesondere können die bandförmigen Materialien auf Bobinen aufgewickelt bereitgestellt und zu gegebener Zeit zu dem Wickelrohr verarbeitet werden. Besonders vorteilhaft ist es, wenn zumindest eine Bobine ortsfest vorgesehen ist. Grundsätzlich ist es nämlich denkbar, dass sich die Bobinen weiterhin um das zu wickelnde Rohr drehen. Durch die in diesem Fall zusätzliche Drehung des Wickelelements kann die Wickelgeschwindigkeit erhöht werden. Wenn darüber hinaus die Drehgeschwindigkeit der Bobinen gegenüber dem bislang bekannten Verfahren verringert wird, können die Bobinen größer und damit schwerer ausgeführt werden, was, wie erwähnt, eine Erhöhung der Materialmenge auf der jeweiligen Bobine möglich macht, so dass die Effizienz insgesamt erhöht wird. Trotz dieser Möglichkeiten wird gegenwärtig bevorzugt, zumindest eine, bevorzugt alle Bobinen ortsfest anzuordnen, was für die Betriebssicherheit und Gestaltungsmöglichkeiten der Bobinen Vorteile bietet.

Grundsätzlich können die bandförmigen Materialien von den jeweiligen Bobinen alleine durch die Wirkung des sich drehenden Wickelelements abgewickelt werden. Anhand von Versuchsergebnissen wird jedoch bevorzugt, dass zumindest eine Bobine, bevorzugt alle Bobinen, angetrieben sind. Hierdurch kann in vorteilhafter Weise eine störungsfreie Zuführung des Materials gewährleistet werden.

In diesem Zusammenhang hat es sich auch als günstig herausgestellt, wenn der Antrieb zumindest einer Bobine mit dem Antrieb des Wickelelements gekoppelt ist, und der Antrieb des Wickelelements gewissermaßen die Vorgabe für die Drehzahl des Bobinenantriebs liefert. Hierbei ist das sich drehende Wickelelement gewissermaßen der "Master" und gibt die Drehzahl für den einen oder mehrere Bobinenantriebe vor.

Für das Layout der im Zusammenhang mit dem erfindungsgemäßen Verfahren verwendeten Vorrichtung ist es günstig, wenn das bandförmige Material vor dem Wickeln zumindest einfach umgelenkt wird. Dies ermöglicht beispielsweise, dass sich eine oder mehrere Bobinen nicht notwendigerweise neben der Wickelvorrichtung, sondern mit dieser im Wesentlichen fluchtend befinden. Hierdurch kann die Vorrichtung insgesamt in günstiger Weise schmal ausgeführt werden. Insbesondere ist es nicht erforderlich, für die dabei verwendete Vorrichtung eine vergleichsweise große Breite bereitzustellen, die für eine seitliche Anordnung der Bobinen benötigt würde, jedoch im weiteren Verlauf der Vorrichtung, insbesondere beim Wickeln des Rohres nicht erforderlich ist.

Bei Versuchen hat sich herausgestellt, dass der Wickelkern einen besonders zuverlässigen Betrieb ermöglicht, wenn er hochglanzpoliert ist. Das zu wickelnde Rohr, das im Bereich des Wickelkerns als Hülse bezeichnet werden kann, muss sich nämlich in Umfangsrichtung bezüglich des Wickelkernes drehen, so dass im Fall eines hochglanzpolierten Wickelkernes in günstiger Weise geringe Reibungswerte realisierbar sind.

Bevorzugt erfolgt im Rahmen des erfindungsgemäßen Verfahrens ferner eine axiale Förderung oder Bewegung des Wickelrohres durch ein schraubenförmiges Falzwerkzeug. Dies kann beispielsweise aus einem in dem Rohr befindlichen Element, einer sogenannten Schnecke und einem damit zusammenwirkenden, außenbefindlichen Element, einer sogenannten Mutter bestehen. Bei dem derzeit bevorzugten Verfahren dreht sich das Falzwerkzeug in der gleichen Richtung wie das Wickelelement und fördert durch seine schraubenförmige Gestaltung und einen Unterschied in der Drehgeschwindigkeit bezüglich der Drehgeschwindigkeit des Wickelelements das Wickelrohr in Axialrichtung. Ferner kann das Falzwerkzeug eine grobe Rillung auf das Wickelrohr aufbringen und die einzelnen Materiallagen miteinander verpressen. Schließlich schiebt das Falzwerkzeug gemäß der derzeit bevorzugten Ausführungsform das Wickelrohr auf den Kerndorn im Inneren des Rohres, und durch die Reibung zwischen dem Kerndorn und dem Wickelrohr wird dieses gestaucht, und die Rillung wird deutlich feiner. Die Aktivierung des Klebstoffs durch Wärmeeinwirkung kann unmittelbar nach dem Kerndorn erfolgen. Der Antrieb für das Falzwerkzeug kann sich im Inneren des Wickelkerns befinden. Ferner kann der Antrieb für den Kerndorn durch den Falzwerkzeug-Antrieb hindurchgeführt sein. In diesem Fall ist der Antrieb für den Kerndorn als Welle und der Antrieb für das Falzwerkzeug als Hohlwelle ausgeführt.

Die Lösung der oben genannten Aufgabe erfolgt ferner durch die im Anspruch 8 beschriebene Vorrichtung, die im Wesentlichen Merkmale aufweist, die denjenigen des erfindungsgemäßen Verfahrens entsprechen. Insbesondere ist ein sich drehendes Wickelelement vorgesehen, das mit dem Wickelrohr mittelbar oder unmittelbar in Eingriff ist und das Wickeln bewirkt. Die bevorzugten Ausführungsformen der erfindungsgemäßen Vorrichtung entsprechen im Wesentlichen denjenigen des oben beschriebenen Verfahrens. Es sei ergänzend erwähnt, dass die zumindest eine Bobine bevorzugt ortsfest vorgesehen ist und/oder derart angeordnet ist, dass sie mit der Wickelvorrichtung weitgehend fluchtet. Die Umlenkung des zumindest einen bandförmigen Materials kann beispielsweise durch eine auf Hochglanz polierte, ortsfeste Stange mit einem Durchmesser von 100 mm bis 150 mm erfolgen. Die Bobinen können im Hinblick auf ihren Antrieb mit dem Antrieb des sich drehenden Wickelelements gekoppelt sein, der eine Vorgabe für die Drehzahl des Bobinenantriebs liefert. Darüber hinaus kann an der jeweiligen Bobine eine Bandsteuerung vorgesehen sein, um eine zuverlässige Zuführung des Materials zu gewährleisten.

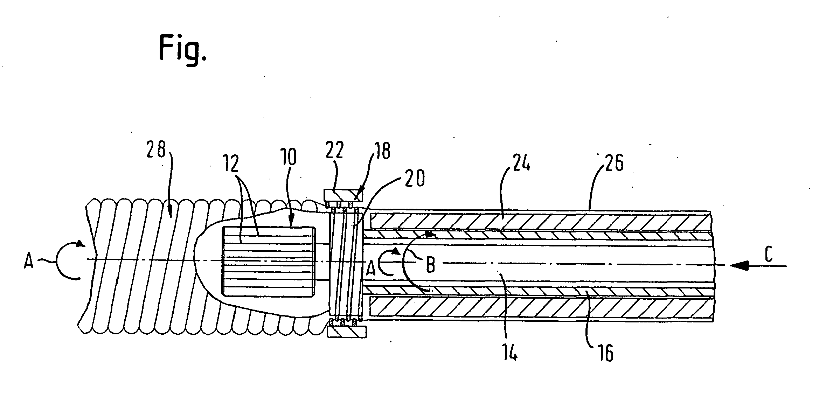

### Kurze Beschreibung der Zeichnung

Nachfolgend wird eine beispielhaft in der Zeichnung dargestellte Ausführungsform näher erläutert.

Die Figur zeigt in einer teilweisen Schnittdarstellung den wesentlichen Abschnitt der erfindungsgemäßen Vorrichtung.

### Ausführliche Beschreibung einer Ausführungsform der Erfindung

Wie in der Figur zu erkennen ist, weist die erfindungsgemäße Vorrichtung zum einen einen sogenannten Kerndorn 10 auf, der beispielsweise 100 mm lang sein kann und mit in Axialrichtung verlaufenden Vorsprüngen oder Zähnen 12 versehen sein kann. Der Kerndorn 10 wird in einer Richtung A angetrieben. Bei dem gezeigten Ausführungsbeispiel erfolgt dies durch eine Welle 14. Diese Welle 14 befindet sich zum einen in einer Hohlwelle 16, die ein sogenanntes Falzwerkzeug 18 in einer Richtung B antreibt, die gleichgerichtet zu der Richtung A ist. In dem gezeigten Fall ist diese Drehrichtung in der Richtung des Uhrzeigersinns, wenn die Anordnung aus der Richtung C betrachtet wird. Bei dem gezeigten Ausführungsbeispiel wird das innere Element des Falzwerkzeugs 18, die sogenannte Schnecke 20 angetrieben. Diese ist von einer sogenannten Mutter 22 umgeben. Dazwischen befindet sich das Wickelrohr, wie nachfolgend noch genauer beschrieben wird.

Die als Antrieb für das Falzwerkzeug 18 vorgesehene Hohlwelle 16 befindet sich ferner im Inneren des sogenannten Wickelkerns 24. Auf diesen Wickelkern 24 wird eine sogenannte Hülse 26 gewickelt, indem sich der Kerndorn 10 mit der Innenseite des zu wickelnden Rohres 28 in Eingriff befindet und dieses in der Richtung A antreibt, so dass die bandförmigen Materialien beispielsweise von (nicht gezeigten) Bobinen abgewickelt werden. Alternativ oder ergänzend hierzu ist es, wie oben ausgeführt, möglich, dass die Bobinen angetrieben werden. Zu den Größenverhältnissen zwischen dem Kerndorn 10 und dem Wickelrohr 28 in der Figur ist anzumerken, dass der Kerndorn aus Gründen der Verdeutlichung mit einem kleineren Durchmesser dargestellt ist, als dies tatsächlich der Fall ist. Der Kerndorn steht nämlich mit seiner radialen Außenseite, d.h. bei der gezeigten Ausführungsform mit den Zähnen 12, mit dem Wickelrohr 28, insbesondere den "Wellentälern" der Rillung unmittelbar oder mittelbar (beispielsweise über das oben genannte Prozesspapier) in Eingriff.

Der Aufbau der Hülse 26 und des späteren Wickelrohres 28 im Einzelnen, bestehend aus mehreren, überlappend aufgebrachten Lagen, ist in der Figur der Einfachheit halber nicht gezeigt. Die bandförmigen Materialien werden jedoch, wie in der Figur erkennbar, auf den Wickelkern 24 in Form der Hülse 26 mit einer weitgehend ebenen Außen- und Innenseite gewickelt. Durch die Relativdrehung des Falzwerkzeugs 18 bezüglich der Hülse 26 und durch die schraubenförmige Gestaltung des Falzwerkzeugs 18 wird die Hülse 26 in Axialrichtung C bewegt und darüber hinaus mit einer groben Rillung versehen. Durch die Bewegung in Axialrichtung "schiebt" das Falzwerkzeug 18 die grob gerillte Hülse 26 auf den Kerndorn 10. Dort erfolgt infolge der Reibung zwischen dem Kerndorn 10 und der Hülse 26 eine Stauchung der Hülse und die Erzeugung einer feineren Rillung.

Nachfolgend kann, was in der Figur nicht mehr dargestellt ist, die Aktivierung der auf einzelnen Lagen vorgesehenen Klebstoffschicht durch Wärmeeinwirkung erfolgen. Ferner kann das erzeugte Rohr auf die gewünschte Rillung gestreckt und zu der gewünschten Länge abgesägt werden.

## Patentansprüche

1. Verfahren zur Herstellung eines Wickelrohres (28) aus zumindest einem bandförmigen Material,
wobei das Wickeln durch zumindest ein sich drehendes Wickelelement (10) bewirkt wird, das mit dem Wickelrohr (28) mittelbar oder unmittelbar in Eingriff ist, und das bandförmige Material auf einen stillstehenden Wickelkern (24) gewickelt wird,
**dadurch gekennzeichnet, dass**
als Wickelelement ein Kerndorn (10) im Inneren des Wickelrohres (28) verwendet wird.

2. Verfahren nach Anspruch 1,
**dadurch gekennzeichnet, dass**
das zumindest eine bandförmige Material von zumindest einer Bobine abgewickelt wird.

3. Verfahren nach Anspruch 2,
**dadurch gekennzeichnet, dass**
zumindest eine Bobine ortsfest ist.

4. Verfahren nach Anspruch 2 oder 3,
**dadurch gekennzeichnet, dass**
zumindest eine Bobine angetrieben wird.

5. Verfahren nach Anspruch 4,
**dadurch gekennzeichnet, dass**
der Antrieb zumindest einer Bobine mit einem Antrieb des Wickelelements (10) gekoppelt ist, und der Antrieb des Wickelelements (10) eine Vorgabe für die Drehzahl zumindest einer Bobine liefert.

6. Verfahren nach einem der vorangehenden Ansprüche,
**dadurch gekennzeichnet, dass**
das bandförmige Material vor dem Wickeln zumindest einfach umgelenkt wird.

7. Verfahren nach einem der vorangehenden Ansprüche,
**dadurch gekennzeichnet, dass**
das Wickelrohr (28) durch ein schraubenförmiges Falzwerkzeug (18) axial (C) gefördert wird, und auf das Wickelrohr durch das schraubenförmige Falzwerkzeug (18) eine grobe Rillung aufgebracht wird.

8. Vorrichtung zur Herstellung eines Wickelrohres (28) aus zumindest einem bandförmigen Material,
wobei diese ein sich drehendes Wickelelement (10), das mit dem Wickelrohr (28) mittelbar oder unmittelbar in Eingriff ist und das Wickeln bewirkt, sowie einen stillstehenden Wickelkern (24) aufweist, auf den das zumindest eine bandförmige Material gewickelt wird,
**dadurch gekennzeichnet, dass**
das Wickelelement ein Kerndorn (10) im Inneren des Wickelrohres (28) ist.

9. Vorrichtung nach Anspruch 8,
**dadurch gekennzeichnet, dass**
der Kerndorn (10) mit einer äußeren Verzahnung (12) versehen ist.

10. Vorrichtung nach einem der Ansprüche 8 oder 9,
**dadurch gekennzeichnet, dass**
diese zumindest eine Bobine aufweist, von der das bandförmige Material abgewickelt wird.

11. Vorrichtung nach Anspruch 10,
**dadurch gekennzeichnet, dass**
zumindest eine Bobine ortsfest vorgesehen ist.

12. Vorrichtung nach Anspruch 10 oder 11,
**dadurch gekennzeichnet, dass**
zumindest eine Bobine angetrieben ist.

13. Vorrichtung nach Anspruch 12,
**dadurch gekennzeichnet, dass**
der Antrieb zumindest einer Bobine mit einem Antrieb des Wickelelements (10) gekoppelt ist, und der Antrieb des Wickelelements (10) eine Vorgabe für die Drehzahl des Antriebs zumindest einer Bobine liefert.

14. Vorrichtung nach einem der Ansprüche 10 bis 13,
**dadurch gekennzeichnet, dass**
zumindest eine Bobine mit der Wickelvorrichtung weitgehend fluchtet.

15. Vorrichtung nach einem der Ansprüche 8 bis 14,
**dadurch gekennzeichnet, dass**
zumindest eine Umlenkvorrichtung für das bandförmige Material vorgesehen ist.

16. Vorrichtung nach einem der Ansprüche 8 bis 15,
**dadurch gekennzeichnet, dass**
der Wickelkern (24) hochglanzpoliert ist.

17. Vorrichtung nach einem der Ansprüche 8 bis 16,
**dadurch gekennzeichnet, dass**
diese ein schraubenförmiges Falzwerkzeug (18) aufweist, welches das Wickelrohr (28) axial fördert und auf dieses eine grobe Rillung aufbringt.

## Claims

1. Method for manufacturing a wrap-around tube (28) from at least one strip-shaped material,
the wrapping being brought about by at least one rotating wrapping element (10) which is indirectly or directly in engagement with the wrap-around tube (28), and the strip-shaped material is wrapped onto a stationary wrapping core (24),
**characterised in that** a core mandrel (10) is used as a wrapping element inside the wrap-around tube (28).

2. Method according to Claim 1,
**characterised in that** the at least one strip-shaped material is unwound from at least one reel.

3. Method according to Claim 2,
**characterised in that** at least one reel is fixed.

4. Method according to Claim 2 or 3,
**characterised in that** at least one reel is driven.

5. Method according to Claim 4,
**characterised in that** the drive of at least one reel is coupled to a drive of the wrapping element (10), and the drive of the wrapping element (10) predetermines the speed of rotation of at least one reel.

6. Method according to one of the preceding claims,
**characterised in that** the strip-shaped material is deflected at least once before the wrapping.

7. Method according to one of the preceding claims,
**characterised in that** the wrap-around tube (28) is conveyed axially (C) by a helical folding tool (18) and a course crease is applied to the wrap-around tube by the helical folding tool (18).

8. Apparatus for manufacturing a wrap-around tube (28) from at least one strip-shaped material,
said apparatus comprising a rotating wrapping element (10) which is indirectly or directly in engagement with the wrap-around tube (28) and brings about the wrapping, and a stationary wrapping core (24), onto which the at least one strip-shaped material is wrapped,
**characterised in that** the wrapping element is a core mandrel (10) inside the wrap-around tube (28).

9. Apparatus according to Claim 8,
**characterised in that** the core mandrel (10) is provided with an external toothing (12).

10. Apparatus according to one of Claims 8 or 9,
**characterised in that** said apparatus comprises at least one reel from which the strip-shaped material is unwound.

11. Apparatus according to Claim 10,
**characterised in that** at least one reel is provided to be stationary.

12. Apparatus according to Claim 10 or 11,
**characterised in that** at least one reel is driven.

13. Apparatus according to Claim 12,
**characterised in that** the drive of at least one reel is coupled to a drive of the wrapping element (10), and the drive of the wrapping element (10) predetermines the speed of rotation of the drive of at least one reel.

14. Apparatus according to one of Claims 10 to 13,
**characterised in that** at least one reel is substantially aligned with the wrapping apparatus.

15. Apparatus according to one of Claims 8 to 14,
**characterised in that** at least one deflecting apparatus is provided for the strip-shaped material.

16. Apparatus according to one of Claims 8 to 15,
**characterised in that** the wrapping core (24) is highly polished.

17. Apparatus according to one of Claims 8 to 16,
**characterised in that** said apparatus comprises a helical folding tool (18) which conveys the wrap-around tube (28) axially and applies a coarse crease to said wrap-around tube.

## Revendications

1. Procédé de fabrication d'un tube d'enroulement (28) à partir d'au moins un matériau en forme de bande,
l'enroulement étant provoqué par au moins un élément d'enroulement (10) en rotation, qui est en prise indirecte ou directe avec le tube d'enroulement (28), et le matériau en forme de bande étant enroulé sur un noyau d'enroulement (24) fixe,
**caractérisé en ce que**
une broche de noyau (10) est utilisée comme élément d'enroulement à l'intérieur du tube d'enroulement (28).

2. Procédé selon la revendication 1,
**caractérisé en ce que**
l'au moins un matériau en forme de bande est déroulé d'au moins une bobine.

3. Procédé selon la revendication 2,
**caractérisé en ce que**
au moins une bobine est fixe.

4. Procédé selon la revendication 2 ou 3,
**caractérisé en ce que**
au moins une bobine est entraînée.

5. Procédé selon la revendication 4,
**caractérisé en ce que**
l'entraînement d'au moins une bobine est couplé avec un entraînement de l'élément d'enroulement (10), et l'entraînement de l'élément d'enroulement (10) prédéfinit la vitesse de rotation d'au moins une bobine.

6. Procédé selon l'une quelconque des revendications précédentes,
**caractérisé en ce que**
le matériau en forme de bande est dévié au moins simplement avant l'enroulement.

7. Procédé selon l'une quelconque des revendications précédentes,
**caractérisé en ce que**
le tube d'enroulement (28) est amené axialement (C) par un outil de pliage hélicoïdal (18), et une cannelure grossière est appliquée sur le tube d'enroulement par l'outil de pliage hélicoïdal (18).

8. Dispositif de fabrication d'un tube d'enroulement (28) à partir d'au moins un matériau en forme de bande,
celui-ci présentant un élément d'enroulement (10) en rotation, qui est en prise indirecte ou directe avec le tube d'enroulement (28) et qui provoque l'enroulement, ainsi qu'un noyau d'enroulement (24) fixe sur lequel l'au moins un matériau en forme de bande est enroulé,
**caractérisé en ce que**
l'élément d'enroulement est une broche de noyau (10) à l'intérieur du tube d'enroulement (28).

9. Dispositif selon la revendication 8,
**caractérisé en ce que**
la broche de noyau (10) est dotée d'une denture extérieure (12).

10. Dispositif selon l'une quelconque des revendications 8 ou 9,
**caractérisé en ce que**
celui-ci présente au moins une bobine de laquelle le matériau en forme de bande est déroulé.

11. Dispositif selon la revendication 10,
**caractérisé en ce que**
au moins une bobine est prévue fixe.

12. Dispositif selon la revendication 10 ou 11,
**caractérisé en ce que**
au moins une bobine est entraînée.

13. Dispositif selon la revendication 12,
**caractérisé en ce que**
l'entraînement d'au moins une bobine est couplé avec un entraînement de l'élément d'enroulement (10), et l'entraînement de l'élément d'enroulement (10) prédéfinit la vitesse de rotation d'au moins une bobine.

14. Dispositif selon l'une quelconque des revendications 10 à 13,
**caractérisé en ce que**
au moins une bobine s'aligne pour l'essentiel avec le dispositif d'enroulement.

15. Dispositif selon l'une quelconque des revendications 8 à 14,
**caractérisé en ce que**
au moins un dispositif de déviation est prévu pour le matériau en forme de bande.

16. Dispositif selon l'une quelconque des revendications 8 à 15,
**caractérisé en ce que**
le noyau d'enroulement (24) est poli haute brillance.

17. Dispositif selon l'une quelconque des revendications 8 à 16,
**caractérisé en ce que**
celui-ci présente un outil de pliage hélicoïdal (18), qui amène axialement le tube d'enroulement (28) et applique une cannelure grossière sur celui-ci.
